# EUROPEAN PATENT SPECIFICATION

(11) **EP 3 896 940 B1**
(45) Date of publication and mention of the grant of the patent: **20.11.2024**
(21) Application number: 19900799.8
(22) Date of filing: 17.01.2019
(51) Int. Cl.: H04L 67/565, G06F 16/955

(54) **RESOURCE DESCRIPTION FILE PROCESSING, AND PAGE RESOURCE OBTAINING METHOD AND DEVICE**
VERARBEITUNG VON RESSOURCENBESCHREIBUNGSDATEIEN SOWIE VERFAHREN UND VORRICHTUNG ZUR GEWINNUNG VON SEITENRESSOURCEN
TRAITEMENT DE FICHIER DE DESCRIPTION DE RESSOURCE, ET PROCÉDÉ ET DISPOSITIF D'OBTENTION DE RESSOURCE DE PAGE

(30) Priority: 18.12.2018 CN 201811550196
(43) Date of publication of application: 20.10.2021
(73) Proprietor: Wangsu Science & Technology Co., Ltd., Shanghai 200030 (CN)
(72) Inventor: CHEN, Long, Shanghai 200030 (CN)
(74) Representative: Herrero & Asociados, S.L.
(86) International application number: PCT/CN2019/072179
(87) International publication number: WO 2020/124724

(56) References cited:
- EP-A1- 3 757 777
- CN-A- 104 102 697
- CN-A- 105 072 020
- CN-A- 108 804 514
- CN-A- 108 804 514
- CN-A- 108 804 514
- US-A1- 2005 138 004
- US-B1- 9 830 307
- ANONYMOUS: "How to redirect ANY external links to a specific url format using .htaccess? - Stack Overflow", 15 February 2017 (2017-02-15), XP055875947, Retrieved from the Internet <URL:https://web.archive.org/web/20170215054905/https://stackoverflow.com/questions/35997002/how-to-redirect-any-external-links-to-a-specific-url-format-using-htaccess> [retrieved on 20220103]

## Description

### FIELD OF THE DISCLOSURE

The present disclosure generally relates to the field of Internet technology and, more particularly, relates to a method and a device for processing resource description file and for obtaining page resource.

### BACKGROUND

A website page often includes various resources, and these resources can include, e.g., a document, a script, a page style, and an image, etc. When a client terminal requests for loading a page, a page access request is often sent to a server, and then the server feeds back a resource description file to the client terminal in response to the page access request. The resource description file can include links to various resources in the page. In view of this, according to each link in the resource description file, the client terminal can obtain the corresponding resource.

To improve a loading speed of the page, a content delivery network (CDN) can be used to accelerate the page access request of the client terminal. However, an existing acceleration mode has a problem: only internal links in the page can be accelerated, while external links cannot be accelerated. The reasons include that the CDN often provides an acceleration service for the client terminal by redirecting a domain name system (DNS) of a domain name. Specifically, by redirecting the DNS of the page to an edge node of the CDN, the CDN can enable the client terminal to access the corresponding resource nearby. However, for the external link, the CDN cannot redirect the DNS of the external link, such that the external link cannot be accelerated through the CDN. In the process of parsing the resource description file, the client terminal is likely to introduce resource links, and such resource links are likely to include an external link. Because the external link cannot be accelerated through the CDN, the overall loading speed of the page will be substantially slow.

The document of How to redirect ANY external links to a specific url format using .htaccess? retrieved from the Internet: https://stackoverflow.com/questions/35997002/how-to-redirect-any-external-links-to-a-specific-url-format-using-htaccess, discloses a method for redirecting all the external links.

The document CN 108804514 A discloses a webpage loading method, a server and a webpage loading system. The webpage loading method is applied to the edge serverof a content distribution network.

### BRIEF SUMMARY OF THE DISCLOSURE

The purpose of the present disclosure is to provide a method and a device for processing resource description file and for obtaining page resource, which may improve a loading speed of a page.

The invention is set out in the appended set of claims.

It can be seen from the above that in the technical solution provided by the present disclosure, after sending the access request directed to the target page to the node server, the client terminal may receive the resource description file of the target page fed back by the node server. To determine whether the client terminal introduces an external link in the process of parsing the resource description file, the node server may insert a monitoring script into the fed back resource description file. When parsing the resource description file, the client terminal may execute the monitoring script. When executing the monitoring script, the resource link generated by the client terminal in the process of parsing the resource description file may be monitored, and it may be determined whether the resource link contains an external link. If the resource link contains the external link, the monitoring script may rewrite the external link into an internal link, and may use the rewritten internal link to replace the corresponding external link in the resource link. In view of this, if the client terminal introduces external links in the process of parsing the resource description file, these external links may be rewritten into internal links. Such rewritten internal links together with real internal links may be written into the resource description file.

Subsequently, the client terminal may initiate a resource acquisition request for each link in the resource description file one by one. Because the rewritten links in the resource description files are all internal links, such resource acquisition requests may be received by the node server. The node server may identify the link contained in the received resource acquisition request, and then may determine a target link carrying the specified resource path. The specified resource path may indicate that the target link is not originally an internal link, while is obtained by rewriting an external link. In view of this, for the target link, the node server may obtain the actual external link by parsing, may obtain the corresponding resource according to the external link obtained by parsing, and may feed back the resource to the client terminal. It can be seen that the technical solution provided by the present disclosure may ensure that, through a manner of rewriting the external link, in the resource acquisition request subsequently received by the node server, the links all are in the form of internal links, such that it may be ensured that the node server is capable of accelerating each link. Then, the node server may restore the rewritten internal link into an external link by identifying the specified resource path, and may obtain the resource corresponding to the external link. In view of this, both the internal link and the external link may be accelerated by the node server of the CDN, thereby improving the overall loading speed of the page.

### BRIEF DESCRIPTION OF THE DRAWINGS

To more clearly illustrate the technical solutions in the disclosed embodiments of the present disclosure, drawings to be used in the description of the embodiments will be briefly described below. It is obvious that the drawings in the following description are certain embodiments of the present disclosure, and other drawings may be obtained by a person of ordinary skill in the art in view of the drawings provided without creative efforts.
Figure 1 illustrates a step schematic diagram of a method for processing a resource description file consistent with an embodiment of the present disclosure;
Figure 2 illustrates a flowchart of a method for processing a resource description file consistent with an embodiment of the present disclosure;
Figure 3 illustrates a schematic diagram of a functional module of a client terminal consistent with an embodiment of the present disclosure;
Figure 4 illustrates a schematic structural diagram of a client terminal consistent with an embodiment of the present disclosure;
Figure 5 illustrates a step schematic diagram of a method for obtaining page resource consistent with an embodiment of the present disclosure; and
Figure 6 illustrates an interaction schematic diagram of a method for obtaining page resource consistent with an embodiment of the present disclosure.

### DETAILED DESCRIPTION

For clearer understanding of the aims, technical solutions and effects of the present disclosure, specific embodiments of the present disclosure are now described in detail with reference to the accompanying drawings.

The present disclosure provides a method for processing a resource description file. The method may be applied in a current CDN architecture. In the CDN architecture, a client terminal may be connected to an origin server through a CDN network. The client terminal may be a terminal device used by a user, or may be a software running in the terminal device. For example, the client terminal may be a browser in the terminal device. The origin server may be a service server storing various resources in a website page. The CDN network may include various node servers, and a node server may receive a page access request sent by the client terminal, and may process the page access request.

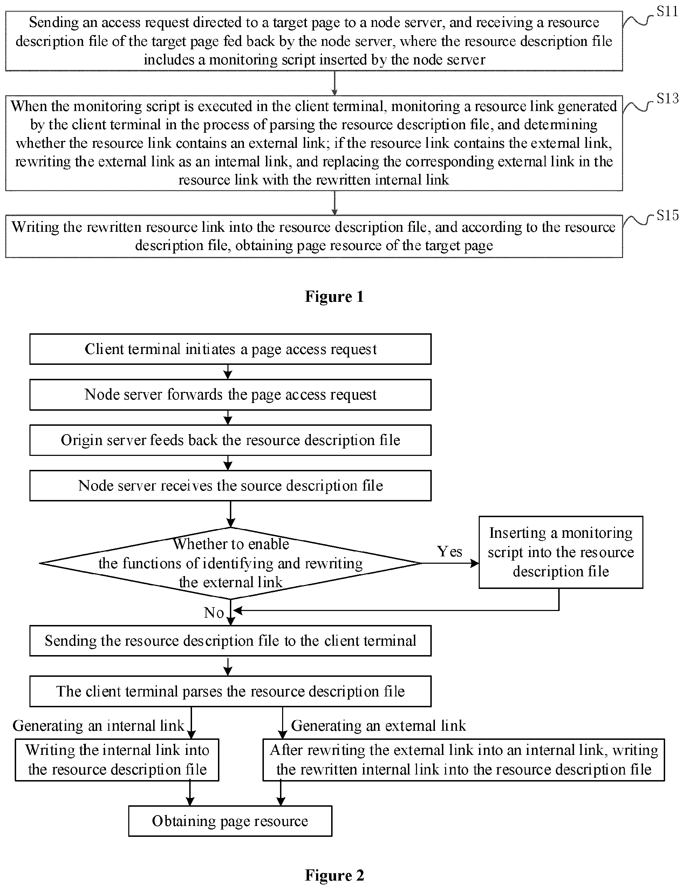

Specifically, referring to Figure 1 and Figure 2, an execution subject of the method for processing the resource description file may be the above-mentioned client terminal, and the method for processing the resource description file may include a plurality of following steps.

In S11: sending an access request directed to a target page to a node server, and receiving a resource description file of the target page fed back by the node server, where the resource description file may include a monitoring script inserted by the node server.

In the present embodiment, when a user wants to access the target page through the client terminal, the client terminal may initiate the access request directed to the target page. The access request may include a domain name of the target page. The access request may be received by a nearby node server, and then according to the domain name carried in the access request, the node server may forward the access request to an origin server corresponding to the domain name.

In the present embodiment, after receiving the access request, the origin server may identify the domain name contained therein, and may find a resource description file corresponding to the domain name. The resource description file may be an HTML document, and the HTML document may include resource links of various resources in the target page.

In the present embodiment, after receiving the resource description file fed back by the origin server, to determine whether the client terminal introduces a new resource link in the process of parsing the resource description file, the node server may insert a pre-edited monitoring script into the resource description file. Specifically, the monitoring script may be inserted into a head tag of the resource description file, and may be located before a first sub-element of the head tag. In view of this, when the client terminal starts to parse the resource description file, the monitoring script may be preferentially parsed, thereby ensuring that the monitoring script can be executed immediately.

In the present embodiment, after inserting the monitoring script into the resource description file, the node server may feed back the resource description file carrying the monitoring script to the client terminal.

In S13: when the monitoring script is executed in the client terminal, monitoring a resource link generated by the client terminal in the process of parsing the resource description file, and determining whether the resource link contains an external link, and if contains, rewriting the external link into an internal link, and replacing the corresponding external link in the resource link with the rewritten internal link.

In the present embodiment, when parsing the resource description file, because the monitoring script is located before the first sub-element of the head tag, the client terminal may preferentially execute the monitoring script. After the monitoring script is executed, the resource link generated by the client terminal in the process of parsing the resource description file may be monitored. In practical applications, the client terminal may have a plurality of ways to introduce a new resource link. For example, the new resource link may be introduced through original data writing functions 'document.write' and 'document.writeln' in the browser. For another example, in another application example, a new tag may be created through an original tag creation function 'document.createElement' in the browser, and a new resource link may be introduced by creating a link under the new tag. For a different manner for introducing a resource link, the monitoring script may perform monitor using a corresponding monitoring strategy.

Specifically, for an application example of a data writing function, during the process of parsing the resource description file performed by the client terminal, the client terminal may call the above-mentioned original data writing function. Parameter in the data writing function may carry a new resource link. In view of this, the monitoring script may predefine a parameter interception function 'docwrite', and may create a data buffer. Then, during the process of parsing the resource description file performed by the client terminal, if the client terminal can call the above-mentioned original data writing function, it may indicate that the new resource link is likely to be introduced through the parameter in the data writing function. Therefore, the monitoring script may obtain the parameter in the data writing function through the parameter interception function, and may write the obtained parameter into the data buffer. Then, the monitoring script may identify the parameter in the data buffer to obtain the resource link contained therein. Specifically, the monitoring script may identify a link attribute identifier in the parameter in the data buffer, and the link attribute identifier may be, e.g., 'src' or 'href'. After identifying the link attribute identifier contained in the parameter, the monitoring script may use the link represented by the link attribute identifier as the resource link generated by the client terminal in the process of parsing the resource description file. For example, the monitoring script may identify the 'src' attribute identifier in the data buffer, and the link represented by the 'src' attribute identifier may be as follows:
<script src = "https://www.123.com/1.js"> </ script>.

Then, 'https://www.123.com/1.js' may be used as the introduced resource link.

In an application example, after identifying the introduced resource link from the parameter in the data buffer, the monitoring script may further determine whether the resource link contains an external link. Specifically, an internal link and an external link may be distinguished through domain names thereof. If a current resource link does not contain a domain name, it may indicate that the link is a link with a default domain name, and such link may often be an internal link. For example, a link like 'script src = "/ js/ jquery.js"'is an internal link. If a current resource link contains a domain name, it may be further determined whether the domain name of the resource link is consistent with a domain name of the target page. If the domain name of the resource link is consistent with the domain name of the target page, the resource link may be determined as an internal link. If the domain name of the resource link is not consistent with the domain name of the target page, the resource link may be determined as an external link.

For example, assuming that the domain name of the target page is 'www.abc.com', and the identified resource links are 'https://www.123.com/1.js' and 'https://www.abc.com/1.js'. In view of this, through the above-mentioned determination method of the domain name, it may be determined that 'https://www.123.com/1.js' is an external link, and 'https://www.abc.com/1.js' is an internal link.

In the present embodiment, considering that the node server cannot subsequently accelerate external links directly, after the monitoring script identifies an external link, the external link may be rewritten in a form of an internal link. Specifically, because a domain name contained in the internal link needs to be consistent with the domain name of the target page, the rewritten domain name may also need to contain the domain name of the target page. In addition, to subsequently distinguish a real internal link and the rewritten internal link, a specified resource path may need to be set in the rewritten internal link. The specified resource path may indicate that the current internal link is actually obtained by rewriting an external link. In practical applications, the specified resource path may be pre-configured by the node server in the monitoring script. In view of this, after the monitoring script identifies an external link, the external link may be rewritten in the form of internal link through the specified resource path. It can be seen from the above that the rewritten internal link may need to contain the domain name of the target page, the specified resource path, and the external link.

In practical applications, the specified resource path may be represented as '/ modify'. In addition, considering that an external link may be written in an informal form, a space or a special character may be likely to be carried in the external link, and the space and the special character may often not be allowed to be carried in the string data transmitted to the node server. Therefore, when rewriting the external link, the external link may need to be converted into corresponding string data according to a preset encoding and decoding rule, thereby eliminating the space and the special character in the external link, and enabling the converted string data to meet the specification requirements for URL (Uniform Resource Locator). In practical applications, the preset encoding and decoding rule may have a plurality of implementation manners. For example, the preset encoding and decoding rule may be 'urlencode' encoding and decoding rule, or may be 'base64' encoding and decoding rule, which is not limited by the present disclosure.

In view of this, after obtaining the domain name of the target page and converting the external link to string data according to the preset encoding and decoding rule, the domain name of the target page and the string data may be integrated according to the preset specified resource path, and the integrated result may be used as the rewritten internal link. In practical applications, in the internal link, the domain name of the target page, the specified resource path, and the string data may be sorted according to a preset rule. For example, the information of such three parts may be arranged in an order from front to back, and, thus, to form the rewritten internal link.

In the present embodiment, to distinguish the above-mentioned string data from data of any other part, the rewritten internal link may further include a locator identifier. The locator identifier may be located after the specified resource path, and assignment of the locator identifier may be the string data. For example, the locator identifier may be "? Url", and the "? Url" may be assigned in a form of "? Url = XXXX", where XXXX may be the string data assigned to "? Url". In view of this, in an application example, through the above manner, an external link such as 'https://www.123.com/1.js' may be rewritten into an internal link:
'https://www.abc.com/modify?url=https%3A%2F%2Fwww.123.com%2F1.js'.

In the above internal link, 'https://www.abc.com' may be the domain name of the target page, '/modify' may be the specified resource path, '?Url' may be the locator identifier, and 'https%3A%2F%2Fwww.123.com%2F1.js' may be the string data obtained through the 'urlencode' encoding manner.

In the present embodiment, according to the above-mentioned manner, the identified external links may be sequentially rewritten, such that each external link introduced by the client terminal may be represented in a form of an internal link. For an internal link introduced by the client terminal, the above-mentioned rewriting process may not be performed.

In the present embodiment, after rewriting an external link into an internal link, in the data buffer, the corresponding external link in the parameter may be replaced with the rewritten internal link to obtain the rewritten parameter in the data buffer. Therefore, it may be ensured that in the rewritten parameter, the manifestations of the resource links are all in the form of internal links.

For an application example of the tag creation function, the original 'document.createElement' function of the browser may create a new element (tag), and a new resource link may be introduced through an 'element.src' instruction. In view of this, a different tag may introduce a different resource link. For example, a script tag 'HTMLScriptElement' may introduce a script link, an image tag 'HTMLImageElement' may introduce an image link, and a style tag 'HTMLLinkElement' may introduce a style link. Therefore, in the present embodiment, tags with different types may need to be monitored to determine whether these tags with different types subsequently introduce new resource links. In view of this, the monitoring script may determine a to-be-monitored tag with a specified type and a to-be-monitored attribute identifier under the tag with the specified type. The tag with the specified type may be each tag exemplified above. In practical applications, tags with substantially few or many types may be contained, which are not limited by the present disclosure. In addition, there may be many attribute identifiers under these tags with specified types. The monitoring script may not need to monitor each attribute identifier, while may merely need to monitor an attribute identifier that is likely to introduce a resource link. Therefore, the above-mentioned to-be-monitored attribute identifier may include 'src' attribute and/or 'href' attribute, and the client terminal may introduce a new resource link through 'element.src' or 'element.href'. In the present embodiment, the monitoring script may further define a data acquisition mode 'setter'. The data acquisition mode may intercept an attribute value of the to-be-monitored attribute identifier, such that the monitoring script may identify whether the intercepted attribute value contains an external link.

In the present embodiment, during the process of parsing the resource description file performed by the client terminal, if the monitoring script monitors a set event of the attribute identifier under the tag with the specified type, it may indicate that currently the client terminal may introduce a new resource link. At this time, the attribute value of the set event may be obtained through the data acquisition mode 'setter', and then a link represented by the attribute value may be used as the resource link generated by the client terminal in the process of parsing the resource description file.

Similarly, after obtaining the resource link introduced by the client terminal, according to the above-mentioned manner, whether the resource link contains an external link may be determined, and the external link may be rewritten in the form of the internal link according to the above-mentioned manner. For the internal link, the above rewriting process may not be performed. After the external link is rewritten in the form of the internal link, in the attribute value obtained through the data acquisition mode, the monitoring script may use the rewritten internal link to replace the corresponding external link, to obtain the rewritten attribute value. Then, through the data acquisition mode, the rewritten attribute value may be returned to the set event, such that new resource links introduced through 'element.src' or 'element.href' manner may be all in the form of internal links.

In S15: writing the rewritten resource link into the resource description file, and according to the resource description file, obtaining the page resource of the target page.

In the present embodiment, after rewriting an external link into an internal link and replacing the corresponding external link with the rewritten internal link, the rewritten resource link may be obtained. In the rewritten resource link, each link may be in the form of an internal link. In view of this, the rewritten resource link may be written into the resource description file, and then the client terminal may subsequently construct a resource acquisition request for the link in the resource description file, thereby obtaining the corresponding page resource.

In practical applications, for an application example of the above-mentioned data writing function, after obtaining the rewritten parameter, the monitoring script may call the original data writing function, and through the original data writing function, the rewritten parameter in the data buffer may be written into the resource description file. For an application example of the above-mentioned tag creation function, after returning the rewritten attribute value to the set event through the data acquisition mode, the rewritten attribute value may be written into the resource description file through the set event. Specifically, the rewritten attribute value may be written into the resource description file through an 'appendChild' manner.

In practical applications, the above-mentioned functions of identifying and rewriting the external link may be set whether to be enabled or not by configuring a function switch in the node server. Referring to Figure 2, if the node server does not enable the functions of identifying and rewriting the external link, after receiving the resource description file fed back from the origin server, the monitoring script may not be inserted, while the resource description file may be directly provided to the client terminal. If the node server has enabled the functions of identifying and rewriting the external link, the monitoring script may be inserted into the resource description file.

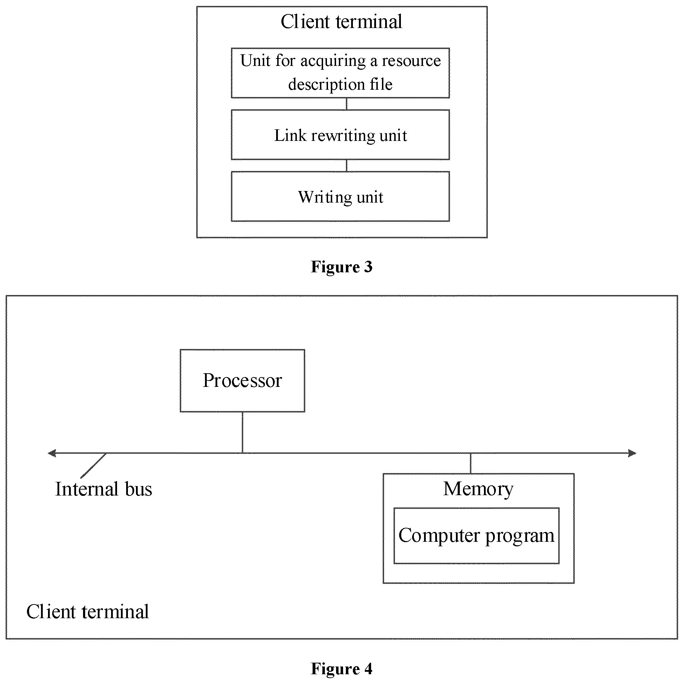

The present disclosure further provides a client terminal. Referring to Figure 3, the client terminal may include:
a unit for acquiring a resource description file, configured to send an access request directed to a target page to a node server, and receive the resource description file of the target page fed back by the node server, where the resource description file may include a monitoring script inserted by the node server;
a link rewriting unit, configured to when the monitoring script is executed in the client terminal, monitor a resource link generated by the client terminal in the process of parsing the resource description file, and determine whether the resource link contains an external link, if the resource link contains an external link, rewrite the external link into an internal link, and replace the corresponding external link in the resource link with the rewritten internal link; and
a writing unit, configured to write the rewritten resource link into the resource description file, and according to the resource description file, obtain page resource of the target page.

In one embodiment, the link rewriting unit may include:
an initialization module, configured to define a parameter interception function and create a data buffer;
a parameter interception module, configured to during the process of parsing the resource description file performed by the client terminal, if the client terminal calls an original data writing function, obtain a parameter in the data writing function through the parameter interception function, and write the obtained parameter into the data buffer; and
an identifier identification module, configured to identify a link attribute identifier from the parameter in the data buffer, and use the link represented by the link attribute identifier as the resource link generated by the client terminal in the process of parsing the resource description file.

In one embodiment, the link rewriting unit may include:
a monitoring information setting module, configured to determine a to-be-monitored tag with a specified type and a to-be-monitored attribute identifier under the tag with the specified type, and define a data acquisition mode;
an event monitoring module, configured to during the process of parsing the resource description file performed by the client terminal, when a set event of the attribute identifier under the tag with the specified type is monitored, obtain an attribute value of the set event through the data acquisition mode; and
a link determining module, configured to use the link represented by the obtained attribute value as the resource link generated by the client terminal in the process of parsing the resource description file.

In one embodiment, the link rewriting unit may further include:
an attribute value returning module, configured to obtain a rewritten attribute value, by replacing the corresponding external link with the rewritten internal link, in the attribute value obtained through the data acquisition mode; and return the rewritten attribute value to the set event through the data acquisition mode.

Correspondingly, the writing unit may be further configured to write the rewritten attribute value into the resource description file through the set event.

The present disclosure further provides a client terminal. Referring to Figure 4, the client terminal may include a memory and a processor. The memory may be used to store a computer program. When the computer program is executed by the processor, the foregoing method for processing the resource description file may be implemented. Specifically, referring to Figure 4, at the hardware level, the client terminal may include the processor, an internal bus, and the memory. The memory may include a memory and a non-volatile memory. The processor may read the corresponding computer program from the non-volatile memory into the memory, and then may execute the computer program. Persons of ordinary skill in the art can understand that the structure shown in Figure 4 is merely schematic, which may not limit the structure of the above identification device. For example, the client terminal may further include more or fewer components than those shown in Figure 4. For example, the client terminal may further include any other processing hardware, e.g., a GPU (graphics processing unit), or may have a configuration different from that shown in Figure 4. In addition to software implementation manner, the present disclosure may not exclude any other implementation manner, e.g., a logic device or a combination of software and hardware.

In the present embodiment, the processor may include a central processing unit (CPU) or a graphics processing unit (GPU), and may also include any other single-chip computer with logic processing capabilities, logic gate circuit, and integrated circuit, etc., or a suitable combination thereof. The memory in the present embodiment may be a memory device for storing information. In a digital system, a device capable of storing binary data may be a memory. In an integrated circuit, a circuit that has a storage function and does not have a physical form may be a memory, e.g., random-access memory (RAM), first-in-first-out (FIFO), etc. In a system, a storage device having a physical form may also be called a memory. When being implemented, the memory may also be implemented in a cloud storage manner. The specific implementation manner is not limited by the present disclosure.

It should be noted that, the specific implementation manner of the client terminal in the present embodiment may refer to the description of the foregoing implementation method for processing the resource description file, which is not repeated herein.

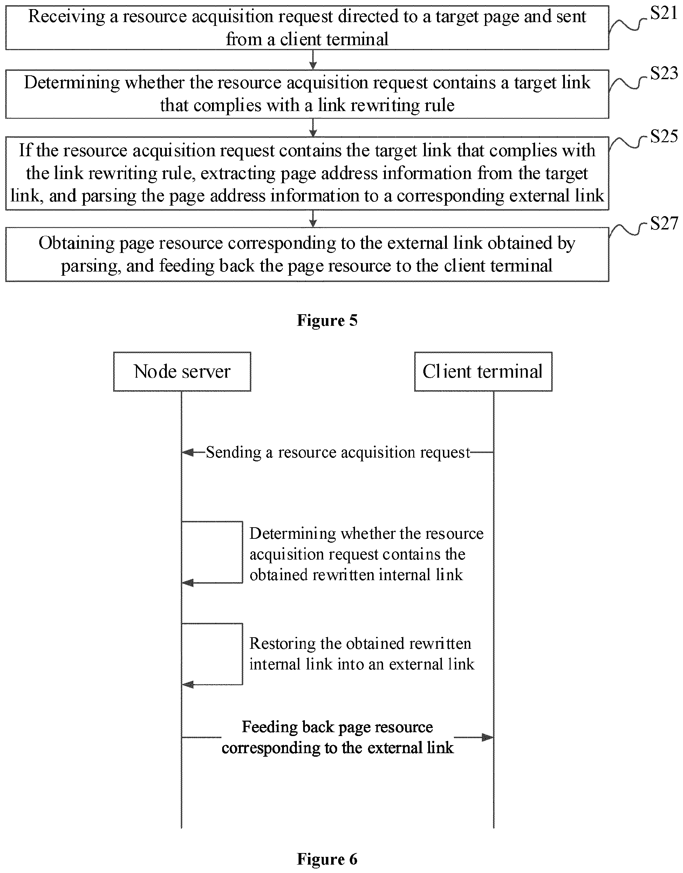

The present disclosure further provides a method for obtaining page resource. Referring to Figure 5 and Figure 6, the method may be applied to the foregoing node server, and the method may include following steps.

In S21: receiving a resource acquisition request directed to a target page and sent from a client terminal.

In the present embodiment, the client terminal may identify each resource link contained in the resource description file, and then may initiate a resource acquisition request for each resource link one by one. In practical applications, to reduce the number of initiated requests, sometimes multiple resource links may be carried in a same resource acquisition request, which is not limited in the present disclosure.

In S23: determining whether the resource acquisition request contains a target link that complies with a link rewriting rule.

In the present embodiment, the resource link in the resource description file may contain a real internal link, and may also contain an internal link rewritten according to the manner described in steps S11 - S15. In view of this, the resource acquisition request initiated by the client terminal may carry the real internal link, and may carry an internal link obtained by rewriting an external link. A link with a different type may need to be processed in a different manner. Specifically, for the real internal link, the node server may directly obtain the page resource corresponding to the real internal link, and feed back the obtained page resource to the client terminal. For the internal link obtained by rewriting the external link, the actual external link may be extracted to obtain the resource corresponding to the external link.

Therefore, in the present embodiment, it is necessary to first determine what kind of internal link is contained in the resource acquisition request sent by the client terminal. Specifically, it may be determined whether the resource acquisition request contains a target link that complies with the link rewriting rule. The link rewriting rule may be represented by the above-mentioned specified resource path. Specifically, it may be determined whether the resource acquisition request contains a link carrying the specified resource path. If the resource acquisition request contains the link carrying the specified resource path, the link carrying the specified resource path may be used as the target link that complies with the link rewriting rule. If the resource acquisition request does not contain the link carrying the specified resource path, it may be determined that the resource acquisition request does not contain the target link that complies with the link rewriting rule. According to the rewriting rule described in step S13, after rewriting the external link, the obtained internal link may include the specified resource path. If the node server identifies the specified resource path from the resource acquisition request, it may indicate that the link carrying the specified resource path may be an internal link obtained by rewriting the external link. If the resource acquisition request does not contain the specified resource path, it may indicate that the link contained in the resource acquisition request is a real internal link.

In S25: if the resource acquisition request contains the target link that complies with the link rewriting rule, extracting page address information from the target link, and parsing the page address information to a corresponding external link.

In the present embodiment, if the resource acquisition request contains a target link carrying the specified resource path, the target link may need to be restored into an external link. Specifically, a locator identifier may be first identified in the target link, and string data represented by the locator identifier may be identified. Therefore, the string data may be extracted into page address information contained in the target link. For example, a target link carrying the specified resource path may be: 'https://www.abc.com/modify?url=https%3A%2F%2Fwww.123.com%2F1.js'.

The locator identifier "? Url" in the target link may be identified, and, thus, the assignment 'https%3A%2F% 2Fwww.123.com%2F1.js' after "? Url" may be used as the extracted page address information.

In the present embodiment, when rewriting the external link, the page address information may be obtained by encoding the external link through a preset encoding and decoding rule. Then, after extracting the page address information, the page address information may still be decoded into the corresponding external link according to the preset encoding and decoding rule. For example, according to the 'urlencode' manner, the above page address information may be decoded into an external link 'https://www.123.com/1.js'.

In S27: obtaining the page resource corresponding to the external link obtained by parsing, and feeding back the page resource to the client terminal.

In the present embodiment, after obtaining the external link by parsing, the page resource corresponding to the external link obtained by parsing may be obtained, and then the page resource may be fed back to the client terminal.

In addition, if the resource acquisition request does not contain a target link that complies with the link rewriting rule, it may indicate that the internal links contained in the resource acquisition request all are real internal links. At this time, the page resource corresponding to the link contained in the resource acquisition request may be directly obtained, and the obtained page resource may be fed back to the client terminal.

It should be noted that the node server may have a resource cache function. After obtaining various page resources, these page resources may be stored in association with their respective resource links, and at the same time, each page resource in the target page may be stored in association with the domain name of the target page. In view of this, when an access request directed to the target page is subsequently sent by the client terminal, it may first check whether the cache contains corresponding cached data. If the cache contains the corresponding cached data, the cached data may be directly fed back to the client terminal. Similarly, after receiving the resource acquisition request sent by the client terminal, it may first check whether the cache already contains cached data corresponding to the resource acquisition request. If the cache already contains cached data corresponding to the resource acquisition request, the cached data may be directly fed back to the client terminal. If the cache does not contain cached data corresponding to the resource acquisition request, the corresponding page resource may be obtained according to the above-mentioned manner.

The present disclosure further provides a node server. The node server may include:
a unit for receiving a resource acquisition request, configured to receive the resource acquisition request directed to a target page and sent from a client terminal;
a link determining unit, configured to determine whether the resource acquisition request contains a target link that complies with a link rewriting rule;
a unit for parsing page address information, configured to if the resource acquisition request contains the target link that complies with the link rewriting rule, extract page address information from the target link and parse the page address information to a corresponding external link; and
a resource feedback unit, configured to obtain page resource corresponding to the external link obtained by parsing and feed back the page resource to the client terminal.

In one embodiment, the link determining unit may include:
a module for determining a specified resource path, configured to determine whether the resource acquisition request contains a link carrying the specified resource path, and if the resource acquisition request contains the link carrying the specified resource path, use the link carrying the specified resource path as the target link that complies with the link rewriting rule, or if the resource acquisition request does not contain the link carrying the specified resource path, determine that the resource acquisition request does not contain the target link that complies with the link rewriting rule.

In one embodiment, the page address information may be obtained by encoding the external link through a preset encoding and decoding rule. Correspondingly, the unit for parsing the page address information may be further configured to according to the preset encoding and decoding rule, decode the page address information to a corresponding external link.

The present disclosure further provides a node server. The node server may include a memory and a processor. The memory may be used to store a computer program. When the computer program is executed by the processor, the foregoing method for obtaining the page resource may be implemented.

It can be seen from the above that in the technical solution provided by the present disclosure, after sending the access request directed to the target page to the node server, the client terminal may receive the resource description file of the target page fed back by the node server. To determine whether the client terminal introduces an external link in the process of parsing the resource description file, the node server may insert the monitoring script into the fed back resource description file. When parsing the resource description file, the client terminal may execute the monitoring script. When executing the monitoring script, the resource link generated by the client terminal in the process of parsing the resource description file may be monitored, and it may be determined whether the resource link contains an external link. If the resource link contains the external link, the monitoring script may rewrite the external link into an internal link, and may use the rewritten internal link to replace the corresponding external link in the resource link. In view of this, if the client terminal introduces external links in the process of parsing the resource description file, these external links may be rewritten into internal links. Such rewritten internal links together with the real internal links may be written into the resource description file.

Subsequently, the client terminal may initiate a resource acquisition request for each link in the resource description file one by one. Because the rewritten links in the resource description files are all internal links, such resource acquisition requests may be received by the node server. The node server may identify the link contained in the received resource acquisition request, and then may determine a target link carrying the specified resource path. The specified resource path may indicate that the target link is not originally an internal link, while is obtained by rewriting an external link. In view of this, for the target link, the node server may obtain the actual external link by parsing, may obtain the corresponding resource according to the external link obtained by parsing, and may feed back the resource to the client terminal. It can be seen that the technical solution provided by the present disclosure may ensure that, in the resource acquisition request subsequently received by the node server, by rewriting external links, the links all are in the form of internal links, such that it may be ensured that the node server is capable of accelerating each link. Then, the node server may restore the rewritten internal link into an external link by identifying the specified resource path, and may obtain the resource corresponding to the external link. In view of this, both the internal link and the external link may be accelerated by the node server of the CDN, thereby improving the overall loading speed of the page.

Through the description of the above embodiments, those skilled in the art can clearly understand that each embodiment may be implemented by means of software and a necessary universal hardware platform, and may also be implemented by hardware. Based on such understanding, the above-mentioned essential technical solution or part that contributes to the existing technology may be embodied in the form of a software product. The computer software product may be stored in a computer-readable storage medium, e.g., read-only memory (ROM)/RAM, a magnetic disc, an optical disc, etc., and may include a plurality of instructions for enabling a computer device (e.g., a personal computer, a server, or a network device, etc.) to execute the method described in various embodiments or certain parts of the embodiments.

The above descriptions are merely the preferred embodiments of the present disclosure, and are not intended to limit the present disclosure.

## Claims

1. A method for processing a resource description file, wherein the method is applied to a client terminal, and comprises:
sending (S11) an access request directed to a target page to a node server, and receiving the resource description file of the target page fed back by the node server, wherein the resource description file includes a monitoring script inserted by the node server;
when the monitoring script is executed in the client terminal, monitoring (S13) a resource link generated by the client terminal in a process of parsing the resource description file, determining whether the resource link contains an external link, and if the resource link contains an external link, rewriting the external link into an internal link, and replacing the corresponding external link in the resource link with the rewritten internal link; and
writing (S15) the rewritten resource link into the resource description file, and according to the resource description file including the rewritten resource link, obtaining a page resource of the target page;
wherein a specified resource path is preset by the node server in the monitoring script, wherein rewriting the external link into the internal link includes:
through the specified resource path, integrating the domain name of the target page and the external link, and using an integrated result as the rewritten internal link.

2. The method according to claim 1, wherein monitoring the resource link generated by the client terminal in the process of parsing the resource description file includes:
defining a parameter interception function, and creating a data buffer;
during the process of parsing the resource description file performed by the client terminal, if the client terminal calls an original data writing function, obtaining a parameter in the data writing function through the parameter interception function, and writing the obtained parameter into the data buffer; and
identifying a link attribute identifier from the parameter in the data buffer, and using a link represented by the link attribute identifier as the resource link generated by the client terminal in the process of parsing the resource description file.

3. The method according to claim 2, wherein replacing the corresponding external link in the resource link with the rewritten internal link includes:
obtaining a rewritten parameter in the data buffer by replacing the external link corresponding to the parameter with the rewritten internal link; and
correspondingly, writing the rewritten resource link into the resource description file includes:
calling the original data writing function, and through the original data writing function, writing the rewritten parameter in the data buffer into the resource description file.

4. The method according to claim 1, wherein monitoring the resource link generated by the client terminal in the process of parsing the resource description file includes:
determining a to-be-monitored tag with a specified type and a to-be-monitored attribute identifier under the tag with the specified type, and defining a data acquisition mode;
during the process of parsing the resource description file performed by the client terminal, when a set event of the attribute identifier under the tag with the specified type is monitored, obtaining an attribute value of the set event through the data acquisition mode; and
using a link represented by the obtained attribute value as the resource link generated by the client terminal in the process of parsing the resource description file.

5. The method according to claim 4, wherein replacing the corresponding external link in the resource link with the rewritten internal link includes:
obtaining, by replacing the corresponding external link with the rewritten internal link, a rewritten attribute value in the attribute value obtained through the data acquisition mode, and returning the rewritten attribute value to the set event through the data acquisition mode, wherein:
correspondingly, writing the rewritten resource link into the resource description file includes:
through the set event, writing the rewritten attribute value into the resource description file.

6. The method according to any one of claims 1-5, wherein determining whether the resource link contains an external link includes:
determining whether a current resource link contains a domain name, if contains, determining whether the domain name in the current resource link is the same as a domain name of the target page, and if the domain name in the current resource link is the same as the domain name of the target page, determining that the current resource link is an internal link, or if the domain name in the current resource link is different from the domain name of the target page, determining that the current resource link is an external link; or
if the current resource link does not contain the domain name, determining that the current resource link is an internal link.

7. The method according to any one of claims 1-5, wherein through the specified resource path, integrating the domain name of the target page and the external link, and using an integrated result as the rewritten internal link includes:
obtaining a domain name of the target page, and according to a preset encoding and decoding rule, converting the external link to string data; and
through the specified resource path, integrating the domain name of the target page and the string data, and using an integrated result as the rewritten internal link, wherein in the internal link, the domain name of the target page, the specified resource path, and the string data are sorted according to a preset rule.

8. The method according to claim 7, wherein the rewritten internal link further includes a locator identifier, wherein the locator identifier is located after the specified resource path, and assignment of the locator identifier is the string data.

9. A client terminal, wherein the client terminal comprises a memory and a processor, the memory is used to store a computer program, when the computer program is executed by the processor, the method in any one of claims 1-8 is implemented.

10. A method for obtaining a page resource, wherein the method is applied to a node server, and comprises:
presetting a specified resource path in a monitoring script for integrating an external link and a domain name of a target page, and using an integrated result as a rewritten internal link;
feeding back a resource description file carrying the monitoring script to a client terminal; the monitoring script is configured to be executed in the client terminal for:
monitoring a resource link generated by the client terminal in a process of parsing the resource description file, determining whether the resource link contains an external
link, and if the resource link contains an external link, rewriting the external link into the internal link, and replacing the
corresponding external link in the resource link with the rewritten internal link through the specified resource path, and
writing the rewritten resource link into the resource description file;
receiving (S21) a resource acquisition request directed to a target page and sent from a client terminal;
determining (S23) whether the resource acquisition request contains a rewritten internal link link that complies with a link rewriting rule;
if the resource acquisition request contains a rewritten internal link, (S25) page address information from the rewritten internal link link, and parsing the page address information to a corresponding external link; and
obtaining (S27) page resource corresponding to the external link obtained by parsing, and feeding back the page resource to the client terminal;
wherein determining whether the resource acquisition request contains the rewritten internal link that complies with the link rewriting rule includes:
determining whether the resource acquisition request contains a link carrying the specified resource path; and if the resource acquisition request contains said link carrying the specified resource path, using the link carrying the specified resource path as a target link that complies with the link rewriting rule; and if the resource acquisition request does not contain said link carrying the specified resource path,
determining that the resource acquisition request does not contain the target link that complies with the link rewriting rule.

11. The method according to claim 10, wherein extracting the page address information from the target link includes:
identifying a locator identifier in the target link, and using string data represented by the locator identifier as the extracted page address information.

12. The method according to claim 10 or 11, wherein the page address information is obtained by encoding the external link through a preset encoding and decoding rule; and correspondingly, parsing the page address information to the corresponding external link includes:
according to the preset encoding and decoding rule, decoding the page address information to the corresponding external link.

13. The method according to claim 10, further including:
if the resource acquisition request does not contain the target link that complies with the link rewriting rule, obtaining the page resource corresponding to a link contained in the resource acquisition request, and feeding back the obtained page resource to the client terminal.

14. A node server, wherein the node server comprises a memory and a processor, the memory is used to store a computer program, when the computer program is executed by the processor, the method in any one of claims 10-13 is implemented.

## Patentansprüche

1. Eine Methode für die Verarbeitung einer Ressourcenbeschreibungsdatei, wobei die Methode an einem Kundenterminal angewandt wird und Folgendes umfasst:
Senden (S11) einer Zugriffsanforderung, die an eine Zielseite an einen Knotenserver gerichtet ist und Empfang der Ressourcenbeschreibungsdatei der durch den Knotenserver rückgeführten Zielseite, wobei die Ressourcenbeschreibungsdatei ein durch den Knotenserver eingesetztes Überwachungs-Script einschliesst;
wenn das Überwachungs-Script im Kundenterminal ausgeführt wird, Überwachen (S13) einer Ressourcenverbindung, die durch das Kundenterminal in einem Verfahren zum Parsen der Ressourcenbeschreibungdatei generiert wird, Bestimmung, ob die Ressourcenverbindung eine externe Verbindung beinhaltet und wenn die Ressourcenverbindung eine externe Verbindung beinhaltet Umschreiben der externen Verbindung in eine interne Verbindung und substituieren der entsprechenden externen Verbindung in der Ressourcenverbindung durch die umgeschriebene interne Verbindung; und
Schreiben (S15) der umgeschriebenen Ressourcenverbindung in die Ressourcenbeschreibungsdatei und übereinstimmend mit der Ressourcenbeschreibungsdatei einschliesslich der umgeschriebenen Ressourcenverbindung, Erhalt einer Seitenressource der Zielseite;
wobei ein spezifizierter Ressourcenpfad durch den Knotenserver im Überwachungs-Script voreingestellt wird, wobei das Umschreiben der externen Verbindung in eine interne Verbindung Folgendes einschliesst:
durch den spezifizierten Ressourcenpfad Integrierung des Domänennamens der Zielseite und der externen Verbindung und Anwendung eines integrierten Resultats als die umgeschriebene interne Verbindung.

2. Die Methode gemäss Anspruch 1, bei der die Überwachung der durch das Kundenterminal im Verfahren für das Parsen der Ressourcenbeschreibungsdatei generierten Ressourcenverbindung Folgendes einschliesst:
Definieren einer Parameterabfangfunktion und Erstellen eines Datenpuffers;
während des Parsingprozesses der durch das Kundenterminal ausgeführten Ressourcenbeschreibungsdatei, wenn das Kundenterminal eine Originaldatenschreibfunktion aufruft, Erhalt eines Parameters in der Datenschreibfunktion über die Parameterabfangfunktion und Schreiben des erhaltenen Parameters in den Datenpuffer; und
Identifizierung eines Verbindungsattributs vom Parameter im Datenpuffer und Gebrauch einer Verbindung, die durch den Verbindungsattributsbezeichner als die Ressourcenverbindung dargestellt ist, die durch das Kundenterminal im Parsingprozess der Ressourcenbeschreibungsdatei erzeugt wurde.

3. Die Methode gemäss Anspruch 2, bei der das Ersetzen der entsprechenden externen Verbindung in der Ressourcenverbindung durch das Umschreiben der internen Verbindung Folgendes einschliesst:
Erhalt eines umgeschriebenen Parameters im Datenpuffer mittels Ersetzen der externen Verbindung, die dem Parameter mit der umgeschriebenen internen Verbindung entspricht; und wobei dementsprechend das Schreiben der umgeschriebenen Ressourcenverbindung in die Ressourcenbeschreibungsdatei Folgendes einschliesst:
Aufruf der Originaldatenschreibfunktion und durch die Originaldatenschreibfunktion Schreiben des umgeschriebenen Parameters im Datenpuffer in die Ressourcenbeschreibungsdatei.

4. Die Methode gemäss Anspruch1, bei der die Überwachung der Ressourcenverbindung, die durch das Kundenterminal im Parsingprozess der Ressourcenbeschreibungsdatei erzeugt wurde, Folgendes einschliesst:
Bestimmung einer zu-überwachenden Kennung mit einem spezifizierten Typ und eines zu-überwachenden Attributsbezeichners unter der Kennung mit dem spezifizierten Typ, und Definieren eines Datenerfassungsmodus;
Erhalt eines Attributwertes des durch den Datenerfassungsmodus eingestellten Ereignisses während des Verfahrens für das Parsen der Ressourcenbeschreibungsdatei durch das Kundenterminal, wenn ein eingestelltes Ereignis des Attributbezeichners unter der Kennung mit dem spezifizierten Typ überwacht wird,
und
Benutzung einer Verbindung, die durch den erhaltenen Attributwert dargestellt wird als die Ressourcenverbindung, die durch das Kundenterminal im Verfahren für das Parsen der Ressourcenbeschreibungsdati erzeugt wurde.

5. Die Methode gemäss Anspruch 4, bei der das Ersetzen der entsprechenden, externen Verbindung in der Ressourcenverbindung durch die umgeschriebene, interne Verbindung Folgendes einschliesst:
Erhalt durch Ersetzen der entsprechenden externen Verbindung durch die umgeschriebene interne Verbindung, eines umgeschriebenen Attributwertes in den durch den Datenerfassungsmodus erhaltenen Attributwert, und Melden des umgeschriebenen Attributwertes an das eingestellte Ereignis durch den Datenerfassungsmodus,
wobei:
entsprechend das Schreiben der umgeschriebenen Ressourcenverbindung in die Ressourcenbeschreibungsdatei Folgendes umfasst:
durch das eingestellte Ereignis Schreiben des umgeschriebenen Attributwertes in die Ressourcenbeschreibungsdatei.

6. Die Methode gemäss irgendeinem der Ansprüche 1-5, bei der die Bestimmung, ob die Ressourcenverbindung eine externe Verbindung enthält, Folgendes einschliesst:
Bestimmung, ob eine laufende Ressourcenverbindung einen Domänenname einschliesst, wenn ja, Bestimmung, ob der Domänenname in der laufenden Ressourcenverbindung derselbe ist wie ein Domänenname der Zielseite, und wenn der Domänenname in der laufenden Ressourcenverbindung derselbe ist wie der Domänenname der Zielseite, Bestimmung, dass die laufende Ressourcenverbindung eine interne Verbindung ist, oder wenn der Domänenname in der laufenden Ressourcenverbindung ein anderer ist als der Domänenname der Zielseite, Bestimmung, dass die laufende Ressourcenverbindung eine externe Verbindung ist; oder
wenn die laufende Ressourcenverbindung nicht den Domänenname enthält, Bestimmung, dass die laufende Ressourcenverbindung eine interne Verbindung ist.

7. Die Methode gemäss irgendeinem der Ansprüche 1-5, wobei durch den spezifizierten Ressourcenpfad die Integrierung des Domänennames der Zielseite und der externen Verbindung und die Anwendung eines integrierten Ergebnisses als die umgeschriebene interne Verbindung, Folgendes einschliessen:
Erhalt eines Domänennamens der Zielseite und, übereinstimmend mit einer voreingestellten Verschlüsselung und Verschlüsselungsvorschrift, Konvertieren der externen Verbindung in Zeichenfolgendaten; und
durch den spezifizierten Ressourcenpfad Integrierung des Domänennamens der Zielseite und der Zeichenfolgendaten und Anwendung eines integrierten Ergebnisses als die umgeschriebene interne Verbindung, wobei in der internen Verbindung der Domänenname der Zielseite, der spezifizierte Ressourcenpfad und die Zeichenfolgendaten übereinstimmend mit einer vorgegebenen Vorschrift sortiert sind.

8. Die Methode gemäss Anspruch 7, bei der die umgeschriebene, interne Verbindung weiter einen Lokalisierungsbezeichner einschliesst, wobei der Lokalisierungsbezeichner nach dem spefizierten Ressourcenpfad lokalisiert wird und die Zuordnung des Lokalisierungsbezeichners die Zeichnfolgendaten sind.

9. Ein Kundenterminal, wobei das Kundenterminal einen Speicher und einen Prozessor umfasst, der Speicher für die Speicherung eines Computerprogramms benutzt wird, und wenn das Computerprogramm durch den Prozessor ausgeführt wird, wird die Methode gemäss irgendeinem der Ansprüche 1-8 durchgeführt.

10. Eine Methode für den Erhalt einer Seitenressource, wobei die Methode bei einem Knotenserver zur Anwendung kommt und Folgendes umfasst:
Voreinstellen eines spezifizierten Ressourcenpfades in einem Überwachungsskript für die Integration einer externen Verbindung und eines Domänennamens einer Zielseite und Verwendung eines integrierten Ergebnisses als eine umgeschriebene, interne Verbindung:
Rückführung einer Ressourcenbeschreibungsdatei, die das Überwachungsskript enthält, zu einem Kundenterminal;
wobei as Überwachungsskript konfiguriert ist, um im Kundenterminal ausgeführt zu werden für:
die Überwachung einer durch das Kundenterminal in einem Verfahren für Parsen der Ressourcenbeschreibungsdatei erzeugten Ressourcenverbindung, Bestimmung, ob die Ressourcenverbindung eine externe Verbindung einschliesst; und, wenn die Ressourcenverbindung eine externe Verbindung einschliesst, Umschreiben der externen Verbindung in die interne Verbindung und Ersetzen der entsprechenden externen Verbindung in der Ressourcenverbindung durch die umgeschriebene interne Verbindung über den spezifizierten Ressourcenpfad,
Schreiben der umgeschriebenen Ressourcenverbindung in die Ressourvenbeschreibungsdatei;
Empfang (S21) einer Ressourcenerfassungsanforderung, die an die Zielseite gerichtet ist und vom Kundenterminal gesandt wurde;
Bestimmung (S23), ob die Ressourcenerfassungsanforderung eine umgeschriebene interne Verbindung enthält, Verbindung, die eine Verbindungsumschreibungsregel einhält;
wenn die Ressourcenerfassungsanforderung eine umgeschriebene interne Verbindung enthält, Extrahieren (S25) von Seitenadresseninformation aus der umgeschriebenen internen Verbindung und Parsen der Seitenadresseninformation an eine entsprechende externe Verbindung; und
Erhalt (S27) einer Seitenressource, die der durch das Parsen erhaltenen externen Verbindung entspricht, und Rückführung der Seitenressource an das Kundenterminal;
wobei die Bestimmung, ob die Ressourcenerfassungsanforderung die umgeschriebene interne Verbindung enthält, die die Verbindungsumschreibungsregel erfüllt, Folgendes einschliesst:
Bestimmung, ob die Ressourcenerfassungsanforderung eine Verbindung enthält, die den spezifizierten Ressourcenpfad trägt; und wenn die Ressourcenerfassungsanforderung besagte Verbindung enthält, die den spezifischen Ressourcenpfad,
Anwendung der Verbindung, die den spezifizierten Ressourcenpfad führt als eine Zielverbindung, die die Verbindungsumschreibungsregel erfüllt; und wenn die Ressourcenerfassungsanforderung nicht besagte Verbindung enthält die den spezifizierten Ressourcenpfad führt, Bestimmung, dass die Ressourcenerfassungsanforderung nicht die Zieverbindung enthält, die die Verbindungsumschreibungsregel erfüllt.

11. Die Methode gemäss Anspruch 10, bei der das Extrahieren der Seitenadresseninformation aus der Zielverbindung Folgendes einschliesst:
Identifikation eines Lokalisierungsbezeichners in der Zielverbindung, und Anwendung von Zeichenfolgendaten, die durch den Suchgerätbezeichner als die extrahierte Seitenadresseninformation dargestellt sind.

12. Die Methode gemäss Anspruxh 10 oder 11, bei der die Seitenadresseninformation durch Verschlüsseln der externen Verbindung mittels einer voreingestellten Verschlüssellungs- und Entschlüsselungsregel erhalten wird; und wobei dementsprechend das Parsen der Seitenadresseninformation an die entsprechende externe Verbindung Folgendes einschliesst:
Übereinstimmend mit der voreingestellten Verschlüsselungs- und Entschlüsselungsregel, Entschlüsseln der Seitenadresseninformation an die entsprechende externe Verbindung.

13. Die Methode gemäss Anspruch 10, die weiter Folgendes einschliesst:
Wenn die Ressourcenerfassungsanforderung nicht die Zielverbindung enthält, die die Verbindungsumschreibungsregel erfüllt, Erhalt der Seitenressource, die einer Verbindung entspricht, die in der Ressourcenerfassungsanforderung enthalten ist, und Rückführung der erhalten Seitenressource an das Kundenterminal.

14. Ein Knotenserver, wobei der Knotenserver einen Speicher und einen Prozessor umfasst, der Speicher für das Speichern eines Computerprogramms benutzt wird, und wenn das Computerprogramm durch den Prozessor ausgeführt wird, wird die Methode gemäss irgendeinem der Ansprüche 10-13 implementiert.

## Revendications

1. Procédé pour le traitement d'un fichier de description de ressources, dans lequel le procédé est appliqué à un terminal client, et qui comprend :
l'envoi (S11) à un serveur de noeuds d'une demande d'accès dirigée vers une page de destination, et la réception du fichier de description de ressources de la page de destination renvoyé par le serveur de noeuds, le fichier de description de ressources comprenant un script de surveillance inséré par le serveur de noeuds ;
lorsque le script de surveillance est exécuté dans le terminal client, la surveillance (S13) d'un lien de ressource généré par le terminal client dans un processus d'analyse du fichier de description de ressource, la détermination si le lien de ressource contient un lien externe, et si le lien de ressource contient un lien externe,
la réécriture du lien externe en un lien interne, et le remplacement du lien externe correspondant dans le lien de ressources par le lien interne réécrit ; et
l'écriture (S15) du lien de ressource réécrit dans le fichier de description de ressources et, en fonction du fichier de description de ressources comprenant le lien de ressource réécrit, l'obtention de la ressource de page de la page de destination ;
dans lequel
un chemin d'accès spécifié est prédéfini par le serveur de noeuds dans le script de surveillance, la réécriture du lien externe en un lien interne comprenant ce qui suit :
l'intégration, par le biais du chemin d'accès spécifié, du nom de domaine de la page de destination et du lien externe, et l'utilisation d'un résultat intégré en tant que lien interne réécrit.

2. Le procédé selon la revendication 1, dans lequel la surveillance du lien de ressource généré par le terminal client dans le processus d'analyse du fichier de description de ressources comprend :
la définition d'une fonction d'interception de paramètres, ainsi que la création d'une mémoire tampon de données ;
au cours du processus d'analyse du fichier de description de ressources effectué par le terminal client, si ce dernier invoque une fonction d'écriture de données d'origine, l'obtention d'un paramètre dans la fonction d'écriture de données par l'intermédiaire de la fonction d'interception de paramètres, et l'écriture du paramètre obtenu dans la mémoire tampon de données ; et
l'identification d'un identifiant d'attribut de lien à partir du paramètre contenu dans le tampon de données, et l'utilisation d'un lien représenté par l'identifiant d'attribut de lien en tant que lien de ressource généré par le terminal client dans le processus d'analyse du fichier de description de ressources.

3. Le procédé selon la revendication 2, dans lequel le remplacement dans le lien de ressource du lien externe correspondant par le lien interne réécrit comprend les étapes suivantes :
l'obtention d'un paramètre réécrit dans le tampon de données en remplaçant le lien externe correspondant au paramètre par le lien interne réécrit ; et
en conséquence, l'écriture du lien de ressource réécrit dans le fichier de description de ressource comprend :
invoquer la fonction d'écriture des données d'origine et, par l'intermédiaire de la fonction d'écriture des données d'origine, écrire le paramètre réécrit dans la mémoire tampon des données dans le fichier de description des ressources.

4. Le procédé selon la revendication 1, dans lequel la surveillance du lien de ressource généré par le terminal client pendant le processus d'analyse du fichier de description de ressource comprend :
déterminer un identifiant à surveiller d'un type spécifié et un identifiant d'attribut à surveiller sous l'identifiant du type spécifié, et définir un mode d'acquisition de données ;
au cours du processus d'analyse du fichier de description de ressource exécuté par le terminal client, lorsqu'un certain événement de l'identificateur d'attribut sous l'identificateur ayant le type spécifié est surveillé, obtenir une valeur d'attribut de l'événement par le biais du mode d'acquisition de données ; et
utiliser un lien représenté par la valeur d'attribut obtenue comme lien de ressource généré par le terminal client dans le processus d'analyse du fichier de description de ressource.

5. Le procédé selon la revendication 4, dans lequel le remplacement dans le lien de ressource du lien externe correspondant par le lien interne réécrit comprend ce qui suit :
obtenir, en remplaçant le lien externe correspondant par le lien interne réécrit, une valeur d'attribut réécrite dans la valeur d'attribut obtenue par le mode d'acquisition de données, et renvoyer la valeur d'attribut réécrite à l'événement défini par le biais du mode d'acquisition de données, dans lequel :
de manière correspondante, l'écriture du lien de ressource réécrit dans le fichier de description de ressource comprend :
l'écriture de la valeur d'attribut réécrite dans le fichier de description des ressources par l'intermédiaire de l'événement défini.

6. Le procédé selon une quelconque des revendications 1 à 5, dans lequel la détermination de l'existence d'un lien de ressource contenant un lien externe comprend :
déterminer si un lien de ressource courant contient un nom de domaine, et s'il en contient un, déterminer si le nom de domaine dans le lien de ressource actuel est le même que le nom de domaine de la page de destination, et si le nom de domaine dans le lien de ressource courant est le même que le nom de domaine de la page de destination, déterminer que le lien de ressource actuel est un lien interne, ou si le nom de domaine du lien de ressource courant est différent du nom de domaine de la page de destination, déterminer que le lien de ressource courant est un lien externe ; ou
si le lien de ressource courant ne contient pas le nom de domaine, déterminer que le lien de ressource courant est un lien interne.

7. Le procédé selon une quelconque des revendications 1-5, dans lequel à travers le chemin de ressource spécifié, l'intégration du nom de domaine de la page de destination et du lien externe, et l'utilisation d'un résultat intégré comme lien interne réécrit comprennent :
l'obtention d'un nom de domaine de la page de destination et, conformément à une règle de codage et de décodage prédéfinie, la conversion du lien externe en données de chaîne ; et
par le biais du chemin de ressource spécifié, intégrer le nom de domaine de la page de destination et les données de chaîne, et utiliser un résultat intégré comme lien interne réécrit, où, dans le lien interne, le nom de domaine de la page de destination, le chemin de ressource spécifié et les données de chaîne sont triés en fonction d'une règle prédéfinie.

8. Le procédé selon la revendication 7, dans lequel le lien interne réécrit comprend en outre un identificateur de localisateur, dans lequel l'identificateur de localisateur est situé après le chemin de ressource spécifié, et l'affectation de l'identificateur de localisateur est la chaîne de données.

9. Un terminal client, dans lequel le terminal client comprend une mémoire et un processeur, la mémoire étant utilisée pour stocker un programme d'ordinateur, et lorsque le programme d'ordinateur est exécuté par le processeur, le procédé selon une quelconque des revendications 1-8 est mis en oeuvre.

10. Procédé d'obtention d'une ressource de page, dans lequel le procédé est appliqué à un serveur de noeuds, et qui comprend :
la prédétermination d'un chemin de ressource spécifié dans un script de surveillance pour l'intégration d'un lien externe et d'un nom de domaine d'une page de destination, et l'utilisation d'un résultat intégré en tant que lien interne réécrit ;
le renvoi à un terminal client d'un fichier de description de ressources contenant le script de surveillance ;
dans lequel le script de surveillance est configuré pour être exécuté dans le terminal client pour :
surveiller un lien de ressource généré par le terminal client dans un processus d'analyse du fichier de description de ressource, pour déterminer si le lien de ressource contient un lien externe, et si le lien de ressource contient un lien externe,
réécrire le lien externe en un lien interne et remplacer le lien externe correspondant dans le lien de ressource par le lien interne réécrit via le chemin de ressource spécifié, et
écrire le lien de ressource réécrit dans le fichier de description de ressources ;
recevoir (S21) une demande d'acquisition de ressource dirigée vers une page de destination et envoyée par un terminal client ;
déterminer (S23) si la demande d'acquisition de ressources contient un lien interne réécrit conforme à une règle de réécriture de liens ;
si la demande d'acquisition de ressources contient un lien interne réécrit, extraire (S25) les informations d'adresse de page du lien interne réécrit, et analyser les informations d'adresse de page pour obtenir un lien externe correspondant ; et
obtenir (S27) la ressource de page correspondant au lien externe obtenu par l'analyse, et renvoyer la ressource de page au terminal client ;
où la détermination du fait que la demande d'acquisition de ressources contient le lien interne réécrit qui est conforme à la règle de réécriture de lien comprend :
déterminer si la demande d'acquisition de ressources comprend un lien contenant le chemin de ressources spécifié ; et si la demande d'acquisition de ressources contient ledit lien contenant le chemin de ressources spécifié, utiliser le lien contenant le chemin de ressources spécifié comme lien de destination conforme à la règle de réécriture de liens ; et si la demande d'acquisition de ressources ne contient pas ledit lien contenant le chemin de ressources spécifié,
déterminer que la demande d'acquisition de ressources ne contient pas le lien de destination conforme à la règle de réécriture de liens.

11. Le procédé selon la revendication 10, dans lequel l'extraction des informations d'adresse de page à partir du lien de destination comprend :
l'identification d'un identificateur de localisateur dans le lien de destination, et l'utilisation de données de chaîne représentées par l'identificateur de localisateur en tant qu'informations d'adresse de page extraites.

12. Le procédé selon la revendication 10 ou 11, dans lequel les informations d'adresse de page sont obtenues en codant le lien externe par le biais d'une règle de codage et de décodage prédéfinie ; et dans lequel, de manière correspondante, l'analyse des informations d'adresse de page vers le lien externe correspondant comprend :
décoder les informations relatives à l'adresse de la page vers le lien externe correspondant, conformément à la règle de codage et de décodage prédéfinie.

13. Le procédé selon la revendication 10, comprenant en outre :
si la demande d'acquisition de ressources ne contient pas le lien de destination conforme à la règle de réécriture de liens, obtenir la ressource de page correspondant à un lien contenu dans la demande d'acquisition de ressources, et renvoyer au terminal client la ressource de page obtenue.

14. Un serveur de noeuds, dans lequel le serveur de noeuds comprend une mémoire et un processeur, la mémoire étant utilisée pour stocker un programme d'ordinateur, et lorsque le programme d'ordinateur est exécuté par le processeur, le procédé selon une quelconque des revendications 10 à 13 est mis en oeuvre.
